# EUROPÄISCHE PATENTANMELDUNG

(11) **EP 2 428 621 A1**
(43) Veröffentlichungstag der Anmeldung: **14.03.2012**
(21) Anmeldenummer: 10009508.2
(22) Anmeldetag: 13.09.2010
(51) Int. Cl.: E03F 5/14, E03F 5/16

(54) **Schwerkraft-Abscheider**

(71) Anmelder: Kessel AG, 85101 Lenting (DE)
(72) Erfinder: Kessel, Bernhard, 85101 Lenting (DE)
(74) Vertreter: Grünecker, Kinkeldey, Stockmair & Schwanhäusser

(57) **Zusammenfassung**

Bei einem Schwerkraft-Abscheider (A) mit einem einen Zulauf (4) und einen Auslauf (5) aufweisenden Behälter mit einer vorbestimmten inneren lichten Weite (F) ist im Inneren des Behälters (1) für Zu- und Auslauf (4, 5) ein gemeinsames hohles Bauwerk (6) vorgesehen, in welchem mit Zu- und Auslauf (4, 5) kommunizierende Mündungen (7, 8) durch eine Trennwand (20) separiert und über separate Durchlässe (21, 22) mit dem Inneren des Behälters (1) verbunden sind.

## Beschreibung

Die Erfindung betrifft einen Schwerkraft-Abscheider der im Oberbegriff des Patentanspruchs 1 angegeben Art.

Schwerkraft-Abscheider werden beispielsweise als Leichtflüssigkeits-Abscheider, Fett-Abscheider, Stärke-Abscheider, Schlammfänge oder dergleichen verwendet und weisen am Behälter üblicherweise Zu- und Auslauf an gegenüberliegenden Seiten, beispielsweise jeweils zur Strömungsführung integriert in ein Zulaufbauwerk und ein Auslaufbauwerk auf. In einem Behälter eines Fett-Abscheiders können starre Einbauten zur Strömungsführung vorgesehen sein. Im Regelfall beträgt der Gesamtströmungsweg durch den Behälter in etwa nur eine Strecke entsprechend der lichten Weite des Behälters, wodurch die Abscheideleistung beschränkt ist. Ferner haben beispielsweise Leichtflüssigkeits-Abscheider mindestens zwei Dome oben auf dem Behälter, beispielsweise um zumindest Zugang zu den Zulauf- und Auslaufbauwerken zu haben. Dies ist herstellungstechnisch aufwändig.

Der Erfindung liegt die Aufgabe zur Grunde, einen Schwerkraft-Abscheider der eingangs genannten Art zu schaffen, der herstellungs- und montagetechnisch einfach ist und sich auf Grund eines langen Gesamtströmungswegs durch eine hohe Abscheideleistung auszeichnet.

Die gestellte Aufgabe wird mit den Merkmalen des Patentanspruchs 1 gelöst.

Das Zu- und Auslauf gemeinsame Bauwerk im Inneren des Behälters ist baulich einfach und ermöglicht eine gezielte Strömungsführung mit einem Gesamtströmungsweg, der sich ohne Weiteres länger erstreckt als es der lichten inneren Weite des Behälters entspricht. Dadurch ergibt sich eine hohe Abscheideleistung. Dank des Zu- und Auslauf gemeinsamen Bauwerks lässt sich der Behälter mit nur einem einzigen Dom gestalten, der zweckmäßig oberhalb des Bauwerks vorgesehen ist. Dies bedeutet eine erhebliche Herstellungsvereinfachung und Einsparungen an Material und Gewicht. Das Bauwerk hat Dank der separaten Durchlässe eine Strömungsrichtfunktion, mit der ohne nennenswerte weitere Maßnahmen im Behälter ein optimal langer Gesamtströmungsweg ausbildbar ist.

Im Hinblick auf eine definierte und möglichst gleichförmige Strömung mit guten Strömungsverhältnissen und ohne Totzonen ist es zweckmäßig, wenn die Durchlässe richtungsorientiert im Bauwerk angeordnet sind und Anfang und Ende des über die lichte Weite des Behälters hinaus verlängerten Gesamtströmungswegs definieren.

Um die strömungsausrichtende Wirkung des Bauwerks zu unterstützen, ist es besonders zweckmäßig, im Inneren des Behälters wenigstens einen Vorhang in etwa vertikalhängend zu installieren, der den Gesamtströmungsweg mit wenigstens einem Umlenkbereich definiert, der zwischen dem Vorhang und einer Behälterseitenwand ausgebildet ist. Der Vorhang weist zumindest eine Platte und/oder eine Gewebebahn auf und lässt sich bequem beispielsweise oberhalb des Freispiegels des Schwerkraft-Abscheiders im Behälter installieren, sogar als Nachrüstung, wie gegebenenfalls auch das Bauwerk. Entlang des Vorhangs bilden sich Teilströmungswege mit günstigen Strömungsverhältnissen aus, die über den Umlenkbereich beim Seitenrand des Vorhangs miteinander verbunden sind. Es ist möglich, durchaus mehr als einen Vorhang im Behälterinneren anzubringen, vorausgesetzt, der Behälter ist entsprechend groß, so dass dann gegebenenfalls sogar ein mäanderförmiger Gesamtströmungsweg erzeugt wird, z.B. zwischen einander gegenüberliegenden Mündungen von Zu- und Auslauf.

Um Kurzschlussströmungswege zu vermeiden, ist es zweckmäßig, wenn zumindest einer der Vorhänge oder der Vorhang direkt an das Bauwerk angeschlossen ist.

Bei einer anderen Ausführungsform ist zumindest ein Vorhang im Umlenkbereich von der Behälterseitenwand beabstandet, vorzugsweise mit einem Maß, das etwas kürzer sein kann, als der Abstand des Vorhangs von den Behälterlängswänden, so dass im Umlenkbereich eine vorübergehende Beschleunigung der Strömung bewirkt werden kann.

Bei einer anderen Ausführungsform ist ein Vorhang direkt an eine Behälterseitenwand angeschlossen, vorzugsweise dann, wenn dort unbedingt ein Kurzschlussströmungsweg vermieden werden muss bzw. die Teilströmungswege dort ansonsten einander überschneiden könnten.

Der Vorhang ist zweckmäßig an einer oberhalb eines Freispiegels im Behälter installierten Abhängung verankert. Falls zumindest ein Vorhang installiert wird, kann diesen einen geraden Verlauf, zweckmäßig entlang einer langen Mittelachse des Behälters, oder einen kurvigen Verlauf, haben und/oder können mehrere Vorhänge parallel zueinander oder unter Winkeln zueinander im Behälterinneren verteilt werden, um den Gesamtströmungsweg so lange wie möglich auszubilden.

Zweckmäßig ist das Bauwerk, das die Mündungen von Zulauf und Auslauf vereinigt, ein Schacht oder Topf. Der Schacht kann sich bis zum Behälterboden erstrecken. Der Topf kann einen Topfboden oberhalb des Behälterbodens aufweisen. Im Übrigen kann das Bauwerk oben offen sein, falls zweckmäßig, beispielsweise zur Probenahme.

Bei einer zweckmäßigen Ausführungsform sind Zu- und Auslauf entweder an einer gemeinsamen Behälterseitenwand benachbart zueinander oder an sich gegenüberliegenden Behälterseitenwänden angeordnet, und jeweils über Verrohrungen mit dem Bauwerk verbunden, d.h. mit Verrohrungen, die zu den Mündungen im Bauwerk führen oder diese Mündungen sogar ausbilden. Dieses Konzept lässt sich herstellerseitig oder montageseitig komfortabel realisieren.

Zweckmäßig besitzt der Behälter nur einen einzigen oben liegenden Dom, der die Zugangsmöglichkeit zumindest zu dem Bauwerk ermöglicht. Der Dom sollte zweckmäßig eine Öffnungsweite besitzen, die gegebenenfalls das Einsetzen des Bauwerks und/oder des Vorhangs mit seiner Abhängung nach Wartungszyklen oder zwecks einer Nachrüstung eines bereits in Betrieb gewesenen Schwerkraft-Abscheiders ermöglicht. Deshalb sollte der Dom oberhalb des Bauwerks angeordnet sein.

Bei einer zweckmäßigen Ausführungsform, insbesondere einem Leichtflüssigkeits-Abscheider, ist im Bauwerk in einem durch die Trennwand separierten Volumenbereich für die mit dem Auslauf verbundene Mündung ein auftriebsabhängig selbsttätiger Verschluss vorgesehen, vorzugsweise ein Schwimmer zum Blockieren der Mündung. Dieser Verschluss blockiert die Mündung selbsttätig, sobald sich eine Schicht einer Leichtflüssigkeit einer vorbestimmten Dicke abgeschieden hat, und der Schwimmer absinkt. Das Erreichen dieses die Entsorgung benötigenden Zustands wird angezeigt, wenn trotz zulaufender Flüssigkeit aus dem Auslauf keine Flüssigkeit mehr austritt. Der Verschluss stellt auch sicher, dass aus dem Auslauf keine abgeschiedene Leichtflüssigkeit austreten kann. Das Bauwerk hat in diesem Konzept eine Mehrfachfunktion, da es Zu- und Ablauf zentral und auf einem lokal begrenzten Bereich zusammenführt, Anfang und Ende des Gesamtströmungswegs mit einer Richtungsorientierung definiert, die Separation der Mündungen sicherstellt, eine einfache und funktionssichere Verschlussfunktion hat und eine einfache Probenahme ermöglicht.

Damit abgeschiedene Leichtflüssigkeit aus dem Inneren des Behälters in das Bauwerk gelangen und den Verschluss betätigen kann, ist zweckmäßig im Bauwerk wenigstens eine oben liegende Öffnung zum Volumenbereich für die Mündung zum Auslauf vorgesehen.

Bei einer zweckmäßigen Ausführungsform ist das Bauwerk z. B. ein einstückiges Teil beispielsweise aus Kunststoff mit Außenabmessungen, die kleiner sind als die Innenabmessungen des oberhalb des Bauwerks angeordneten Doms des Behälters. Alternativ könnte das Bauwerk aus anderem Material und/oder zusammengesetzt sein.

Anhand der Zeichnungen werden Ausführungsformen des Erfindungsgegenstandes erläutert. Es zeigen:
- Fig. 1 und 2: zwei einander zugeordnete schematische Schnitte eines Schwerkraft-Abscheiders, beispielsweise eines Fett-Abscheiders oder eines Leichtflüssigkeits-Abscheiders,
- Fig. 3 und 4: zwei einander zugeordnete schematische Schnittdarstellungen einer anderen Ausführungsform eines Schwerkraft-Abscheiders,
- Fig. 5 und 6: zwei einander zugeordnete Schnitte einer weiteren Ausführungsform eines Schwerkraft-Abscheiders, beispielsweise eines Leichtflüssigkeits-Abscheiders,
- Fig. 7: eine Detailvariante zu Fig. 5 und 6,
- Fig. 8 bis 10: schematische Schnittdarstellungen beispielsweise für den Schwerkraft-Abscheider der Fig. 5 und 7, zur Erläuterung des Aufbaus und der Funktion eines Zu- und Auslauf gemeinsamen Bauwerks im Inneren des Behälters des Schwerkraft-Abscheiders,
- Fig. 11 und 12: zwei einander zugeordnete Schnittansichten einer weiteren Ausführungsform eines Schwerkraft-Abscheiders, beispielsweise eines Leichtflüssigkeits-Abscheiders, und
- Fig. 13 bis 16: verschiedene Ausführungsvarianten eines Vorhangs, der bei den Schwerkraft-Abscheidern der Fig. 5 bis 12 Verwendung finden kann, und für den in den Fig. 6 und 7 verschiedene Detailvarianten angedeutet sind.

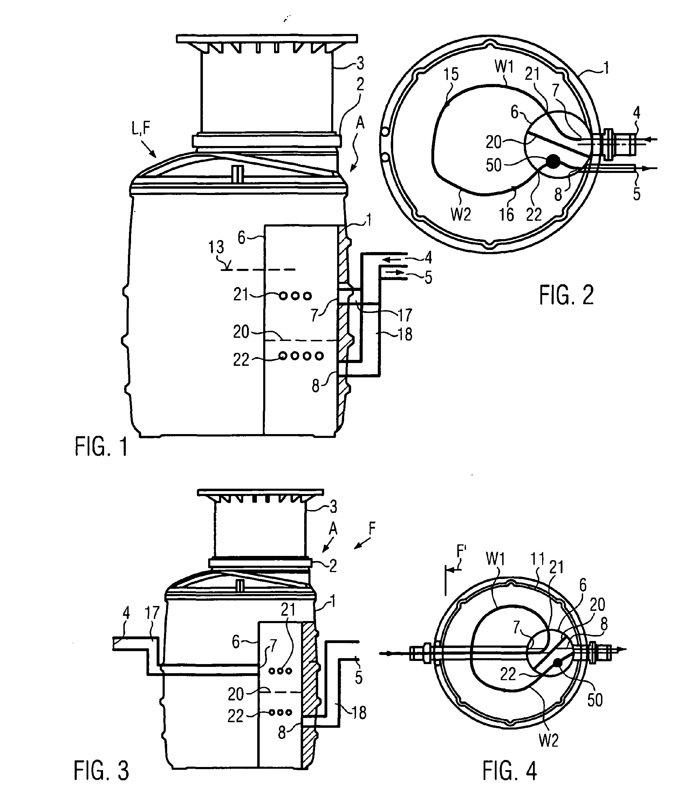

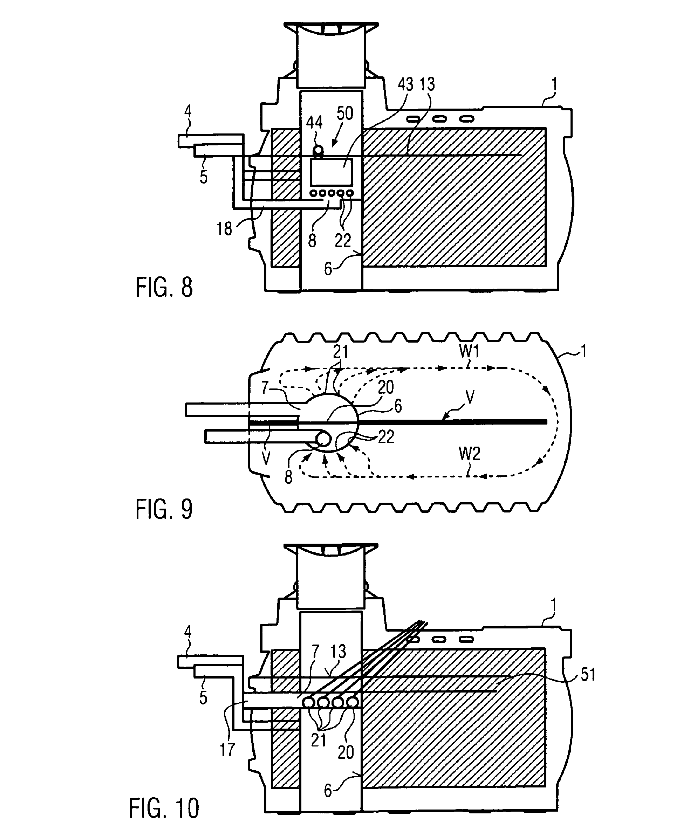

Ein Schwerkraft-Abscheider A gemäß den Fig. 1 und 2 weist einen in dieser Ausführungsform annähernd runden Behälter 1 mit einem oberseitigen Dom 2 und einem eingesteckten Aufsatzstück 3 auf. Der Schwerkraftabscheider A ist beispielsweise ein Fett-Abscheider oder ein Leichtflüssigkeits-Abscheider oder ein Schlammfang oder ein Stärke-Abscheider oder dergleichen, bei dessen Abscheidebetrieb die Schwerkraft ausgenutzt wird, um Substanzen unterschiedlicher Dichten oder spezifischen Gewichte zu trennen und abzuscheiden, die im zulaufenden Abwasser enthalten sind, und teilgereinigtes Abwasser abzuführen. Der Behälter 1 weist hier an einer Behälterseitenwand benachbart einen Zulauf 4 und einen dem Zulauf 4 gegenüber tiefer liegenden Auslauf 5 auf, die über Verrohrungen 17, 18 mit einem im Inneren des Behälters 1 angeordneten, Zu- und Auslauf 4, 5 gemeinsamen Bauwerks 6 verbunden sind, in welchem Mündungen 7, 8 durch eine Trennwand 20 separiert sind. Die Unterkante des Auslaufs 5 definiert beispielsweise einen Freispiegel 13 im Abscheidebetrieb des Schwerkraft-Abscheiders A. Das Bauwerk 6 ist ein Schacht oder Topf, kann oben offen sein, und hat beispielsweise annähernd zylindrische Gestalt. Das Bauwerk 6 kann ein vorgefertigtes hohles Kunststoffbauteil (z. B. ein Rotationsgussteil oder Spritzgussteil) sein, und ist in den Fig. 1 und 2 außerhalb der Mitte des kreisrunden Behälters 1 nahe bei Zu- und Auslauf 4, 5 eingesetzt. Im Bauwerk 6 sind Durchlässe 21 in einem bestimmten Umfangsbereich angeordnet, wie auch Durchlässe 22 in einem anderen Umfangsbereich. Die Durchlässe 21, 22 sind jeweils den Mündungen 7, 8 funktionell zugeordnet, um deren Verbindung mit dem Inneren des Behälters 1 herzustellen. Die Durchlässe 21 bzw. 22 bilden den richtungsorientierten Anfang und das Ende eines Gesamtströmungswegs im Inneren des Behälters 1, der sich aus Teilströmungswegen W1 und W2 mit den Strömungsrichtungen 15, 16 in etwa tangential entlang der Behälterinnenwand zusammensetzt. Die Durchlässe 21 und 22 sind im Bauwerk 6 richtungsorientiert so platziert, und auch in den Mündungen 7 bzw. 8 zugeordneten Höhenlagen, dass sie eine Strömungsrichtfunktion erfüllen. In Fig. 1 ist der an der linken Seite des Bauwerks 6 gegebene Zwischenraum zur strukturierten Behälterseitenwand beispielsweise abgeschottet, um hier eine Kurzschlussströmungsverbindung zu vermeiden. Im durch die Trennwand 20 definierten Volumenbereich für die Mündung 8 kann, falls es sich um einen Leichtflüssigkeits-Abscheider handelt, ein auftriebsbedingt selbsttätiger Verschluss 50 vorgesehen sein, der anhand der Fig. 8 bis 10 näher erläutert wird.

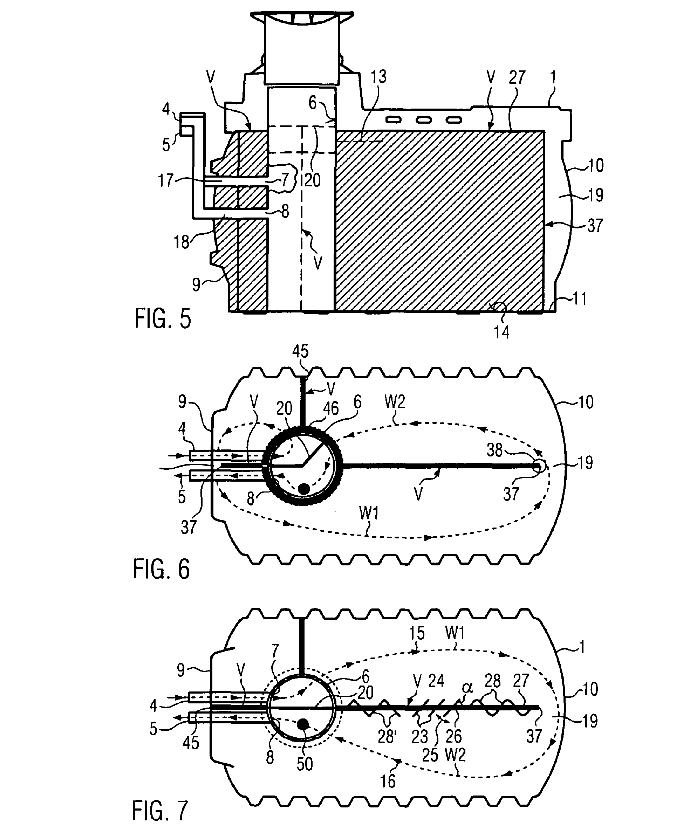

Bei dem in den Fig. 3 und 5 gezeigten Schwerkraft-Abscheider A handelt es sich beispielsweise um einen Fett-Abscheider F, bei welchem am Behälter 1 Zu- und Auslauf einander gegenüberliegen, hingegen die Mündungen 7, 8, die über die Verrohrungen 17, 18 mit Zu- und Auslauf 4, 5 verbunden sind, dennoch im bei einer Behälterseitenwand außerhalb der Mitte angeordneten Bauwerk 6 benachbart platziert sind. Das Bauwerk 6 wird durch die in Fig. 4 schräg gezeigte Trennwand 20 unterteilt, um die Mündungen 7, 8 zu separieren (die Trennwand 20 ist in Fig. 3 gestrichelt nur symbolisch angedeutet). Die Durchlässe 21 bzw. 22 für die Mündungen 7, 8 erfüllen auch hier eine Strömungsorientierungsfunktion für den in Fig. 4 mit einer durchgehenden Linie und den Richtungspfeilen aus den Teilströmungswegen W1, W2 zusammengesetzten Gesamtströmungsweg, der länger ist als die lichte Weite F' des Behälters 1.

Die Ausführungsformen des Schwerkraft-Abscheiders A in den Fig. 5 bis 7 unterscheidet sich von der der Fig. 1 bis 4 vor allem dadurch, dass das Bauwerk 6 für die Mündungen 7, 8 kombiniert ist mit wenigstens einem im Inneren des Behälters 1 oberhalb des Freispiegels 13 an einer Abhängung 27 abgehängten Vorhang V, der unter Anderem zur bewussten Verlängerung des Gesamtströmungswegs im Abscheidebetrieb über die längere lichte inneren Weite F1 des hier langgestreckten Behälters 1 hinaus vorgesehen ist.

In den Fig. 5 und 6 sind insgesamt drei Vorhänge V sternförmig um das Bauwerk 6 gruppiert und an dieses direkt anschließend installiert, um einen optimal langen Gesamtströmungsweg aus den Teilströmungswegen W1, W2 auszubilden, und zwar durch die kombinatorische Wirkung des Bauwerks 6 und der Vorhänge V. In der Detailvariante in Fig. 7 sind nur zwei miteinander fluchtende Vorhänge V in etwa in der Längsmitte des Behälters 1 installiert. Jeder Vorhang V hängt etwa vertikal von einer Abhängung 17 herab.

Fig. 7 verdeutlicht in einer schematischen Schnittansicht angedeutet eine erste Detailvariante des Vorhangs V, der an der Abhängung 27 hängt, und aus einzelnen Platten 23; beispielsweise aus Kunststoff, besteht. Die Platten können gleiche oder verschiedene Breite haben, können sich überlappen oder nicht überlappen und definieren zwischen sich Durchlässe 24. Die Platten 23 sind im Wesentlichen zueinander parallel und mit einem Winkel α so schräg angestellt, dass jede Platte in Strömungsrichtung 15 bzw. 16 zum jeweiligen Teilströmungsweg W1, W2 hin geneigt ist. Der Schrägstellungswinkel α kann variabel sein. Zweckmäßig sind die Platten 23 mit Verankerungen 26 an der Abhängung 27 so festgelegt, dass sie sich in Richtung des Doppelpfeiles 25 verdrehen können.

In der weiteren angedeuteten Detailvariante des Vorhangs V in Fig. 7 hat der Vorhang V einen geradlinigen Verlauf eine Abhängung 27 oberhalb des Freispiegels 13, jedoch eine Wellenstruktur 28 mit gerundeten Kuppen und Wellenschenkeln unter z.B. jeweils 45° gegenüber der Abhängung 27.

Fig. 7 zeigt als Schemadraufsicht auch einen Vorhang V in einer angedeuteten Detailvariante, mit einer Zick-Zack-Struktur 28', wobei jeder Zick-Zack-Schenkel unter etwa 45° gegenüber der Abhängung 27 angestellt ist. Die Zick-Zack-Struktur 28' kann wie auch die Wellenstruktur 28 in Fig. 4 regelmäßig oder bereichsweise unregelmäßig oder allmählich zunehmend oder allmählich abgeschwächt ausgebildet sein, und kann zur zusätzlichen Verlängerung des Gesamtströmungsweges und/oder Strömungsintensivierung beitragen.

Fig. 6 zeigt als weitere Detialvariante für einen geraden Vorhang V z.B. im Bereich des von der Behälterwand 10 beabstandeten Seitenrandes 37 eine Umlenkungsverdickung 38, die beispielsweise runden oder tropfenförmigen Querschnitt oder variablen Querschnitt aufweisen kann und im Umlenkbereich 19 zwischen den Teilströmungen W1, W2 eine vorübergehende Strömungsbeschleunigung und saubere Strömungsführung erzeugen kann. Die Verdickung 38 kann aus dem Material des Vorhangs V gebildet sein, oder aus einem Fremdmaterial, das am Seitenrand 37 angebracht ist.

In den Fig. 6 und 7 ist ferner jeweils mit einem schwarzen Punkt ein selbsttätiger Verschluss 50, beispielsweise für die Mündung 8, angedeutet, wie dies in einem Leichtflüssigkeitsabscheider L üblich ist, um den Auslauf 5 zu blockieren, sobald sich eine bestimmte Schichtdicke der abgeschiedenen Leichtflüssigkeit eingestellt hat, die auf der Flüssigkeit schwimmt, und zwar sowohl im Inneren des Behälters 1 als auch im Bauwerk 6, wie dies anhand der Fig. 8 bis 10 erläutert wird.

In Fig. 8 ist die Mündung 8 über die Verrohrung 18 so im Bauwerk 6 platziert, dass sie innerhalb des Bauwerks 6 nach oben weist. Die Mündung 7 befindet sich vor oder hinter der Zeichnungsebene. Der selbsttätige Verschluss 50 umfasst beispielsweise einen Schwimmer 43 oberhalb der Mündung 8 im Bauwerk 6 und mehrere hier als runde (viereckige oder schlitzförmige) Bohrungen ausgebildete Durchlässe 22, durch welche die Flüssigkeit aus dem Teilströmungsweg W2 in das Bauwerk 6 und zur Mündung 8 eintritt. Oberhalb der Durchlässe 22 ist wenigstens ein Durchlass 44 vorgesehen, der die Leichtflüssigkeit aus dem Inneren des Behälters 1 in das Bauwerk 6 eindringen lässt, um den Schwimmer 43 betätigen zu können.

Fig. 9 verdeutlicht, wie sich die Teilströmungswege W1, W2 durch die Durchlässe 22 bzw. Durchlässe 21 (Fig. 21) in das und aus dem Bauwerk 6 aufzweigen, wobei beispielsweise die Trennwand 20 hier in Ausrichtung mit den beiden Vorhängen V die Mündungen 7, 8 voneinander separiert.

In Fig. 10 ist im Bauwerk 6 und im Behälter 1 die Schicht 51 einer Leichtflüssigkeit angedeutet. Der Mündung 7 sind hier beispielsweise runde (viereckige oder schlitzförmige) Durchlässe 21 zugeordnet, durch welche die zulaufende Flüssigkeit aus dem Bauwerk 6 in den Teilströmungsweg W1 eintritt.

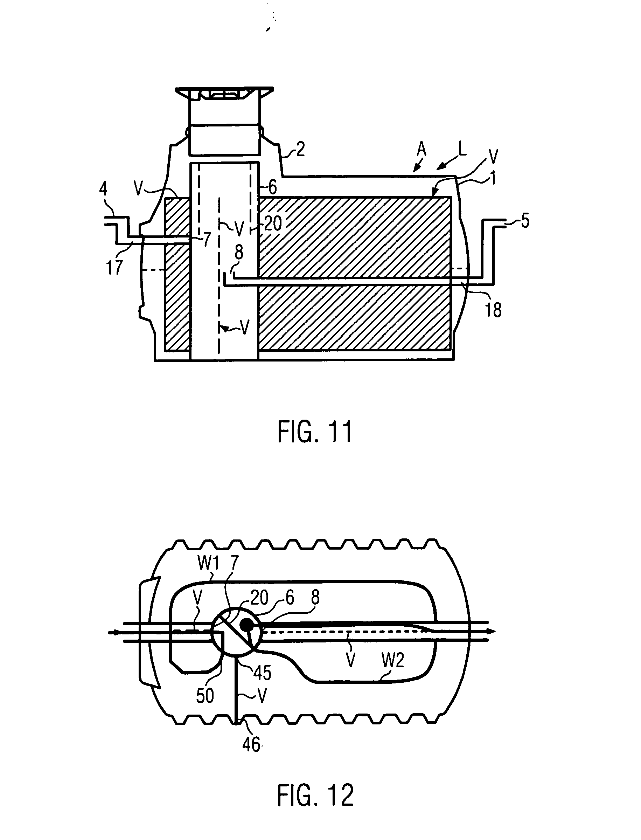

Fig. 11 und 12 verdeutlichen eine weitere Ausführungsform eines Schwerkraft-Abscheiders A, hier beispielsweise eines Leichtflüssigkeitsabscheiders L, dessen länglicher Behälter 1 Zulauf 4 und Auslauf 5 an den sich gegenüberliegenden Behälterseitenwänden 9, 10 aufweist, und das Bauwerk 6 in etwa in der Mitte oder wie gezeigt außermittig nach links versetzt, wobei zu den Mündungen 7, 8 die Verrohrungen 17, 18 führen. Das Bauwerk 6 wird durch die Trennwand 20 unterteilt, die schräg verläuft oder in etwa mit einem kürzeren Vorhang V ausgerichtet ist, der sich vom Bauwerk 6 zur Behälterlängswand erstreckt, und beispielsweise mit seinen Seitenrändern 45, 46 jeweils zumindest weitgehend abdichtet. Die zwei weiteren, in etwa fluchtenden längeren Vorhänge V erstrecken sich ausgehend vom Bauwerk 6 in Richtung zu den Behälterseitenwänden 9, 10 und enden im Abstand von diesen, so dass sich eine brillenförmige Gesamtströmung aus den Teilströmungswegen W1, W2 ergibt, deren Länge erheblich größer ist als die lichte Weite F' des Behälters 1 in Richtung seiner Längsachse. Auch in diesem Fall ist am Behälter 1 nur ein hier in etwa mittiger Dom 2 vorgesehen, und zwar oberhalb des Bauwerks 6.

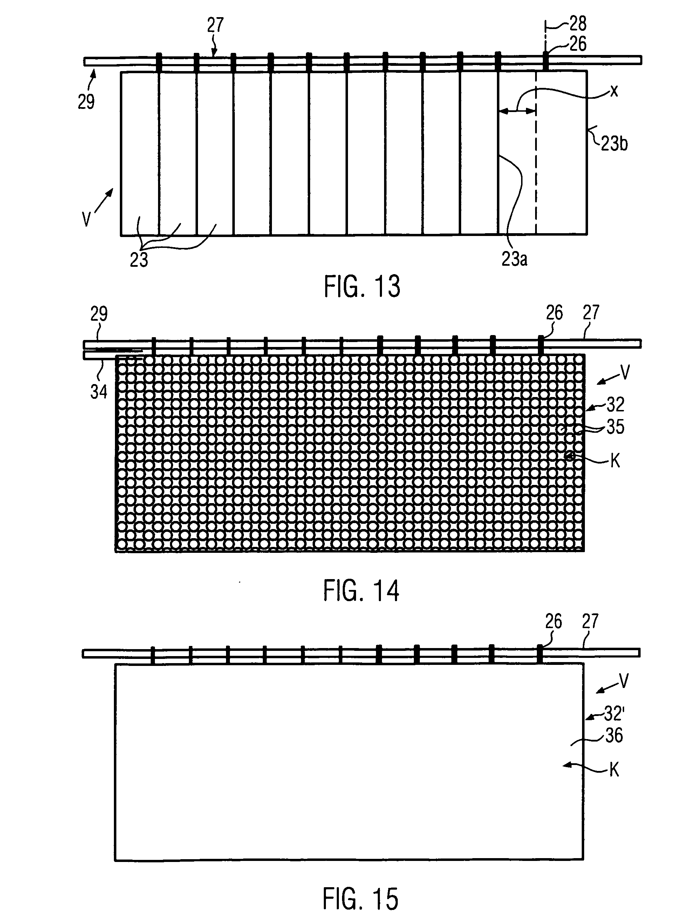

Fig. 13 verdeutlicht eine Ausführungsform eines Vorhangs V, der aus mehreren Platten 23, analog zu Fig. 7, besteht, die hier mit gegenseitigen Überlappungen x über die Verankerungen 26 und um Drehachsen 28 verdrehbar an der Abhängung 27 montiert sind, beispielsweise an einem Schienensystem 29 mit einer oder zwei parallelen Führungen. Die Seitenränder jeder Platte 23 sind mit 23a und 23b angedeutet. Bei den Platten 23 kann es sich beispielsweise um glatte oder strukturierte Kunststoffplatten oder Platten aus einem zumindest gegen Fette und Leichtflüssigkeiten resistenten Material handeln. Die Platten können flexibel oder halbstarr oder starr ausgelegt sein.

Der in Fig. 14 gezeigte Vorhang V ist beispielsweise zumindest eine Gewebebahn 32, die zumindest bereichsweise eine koaliszierende Oberfläche K aufweist, beispielsweise in Form von durchlässigen Maschen 35. Der obere Rand des Vorhangs V kann mit den Verankerungen 26 an der Abhängung 27 installiert werden, beispielsweise an dem Schienensystem 29, oder, wie links angedeutet, in ein längsgeschlitztes Rohr 34 eingefädelt und darin festgelegt sein.

Der Vorhang V in Fig. 15 ist eine Gewebebahn oder eine Platte 32', die nicht notwendigerweise durchlässig ist, dafür aber als koaliszierende Oberfläche K eine Reliefstruktur 36 aufweist (einseitig oder beidseitig), die die Oberfläche vergrößert. Die Gewebebahn oder Platte 32' (gegebenenfalls aus mehreren Abschnitten zusammengesetzt, die hintereinander hängen oder sogar miteinander verbunden sind) kann mit den Verankerungen 26 an der Abhängung 27 installiert sein, oder alternativ auch in dem in Fig. 9 angedeuteten, längsgeschlitzten Rohr 34 mit ihrem Oberrand fixiert sein.

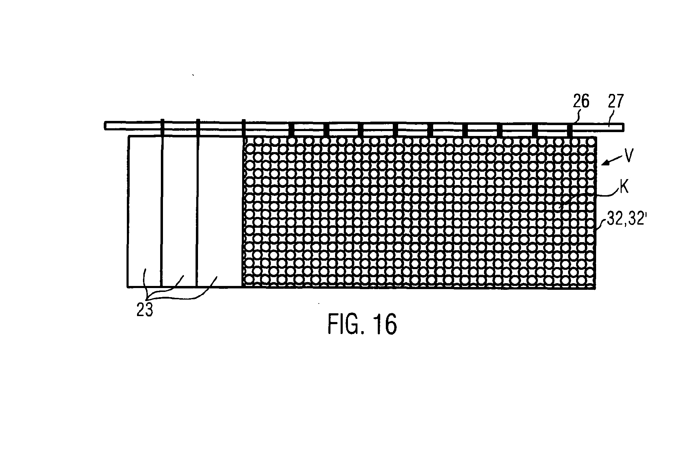

Fig. 16 verdeutlicht einen Vorhang V, der eine Kombination aus den Platten 23 und der Gewebebahn 32 oder der Platte 32' ist. Zumindest an der Gewebebahn 32 bzw. der Platte 32' können koaliszierende Oberflächen K vorgesehen sein, entweder mit den Maschen 35 von Fig. 14 und/oder der Reliefstruktur 36 von Fig. 18.

## Patentansprüche

1. Schwerkraft-Abscheider (A), insbesondere Leichtflüssigkeitsabscheider (L), Fett-Abscheider, Stärke-Abscheider, Schlammfang oder dergleichen, mit einem einen Zulauf (4) und einen Auslauf (5) aufweisenden Behälter (1) mit einer vorbestimmten inneren lichten Weite (F'), **dadurch gekennzeichnet, dass** im Inneren des Behälters (1) für Zu- und Auslauf (4, 5) ein gemeinsames hohles Bauwerk (6) vorgesehen ist, in welchem mit Zu- und Auslauf (4, 5) kommunizierende Mündungen (7, 8) durch eine Trennwand (20) separiert und über separate Durchlässe (21, 22) des Bauwerks (6) mit dem Inneren des Behälters (1) verbunden sind.

2. Schwerkraft-Abscheider nach Anspruch 1, **dadurch gekennzeichnet, dass** die Durchlässe (21, 22) richtungsorientiert im Bauwerk (6) angeordnet sind und Anfang und Ende eines über die lichte Weite (F') des Behälters (1) hinaus verlängerten Gesamtströmungswegs (W1, W2) definieren.

3. Schwerkraft-Abscheider nach Anspruch 1, **dadurch gekennzeichnet, dass** im inneren des Behälters (1) wenigstens ein zumindest eine Platte (23, 32') und/oder eine Gewebebahn (32) aufweisender Vorhang (V) in etwa vertikalhängend installiert ist und den Gesamtströmungsweg mit wenigstens einem Umlenkbereich (19) definiert.

4. Schwerkraft-Abscheider nach Anspruch 3, **dadurch gekennzeichnet, dass** zumindest ein Vorhang (V) direkt an das Bauwerk (6) angeschlossen ist.

5. Schwerkraft-Abscheider nach Anspruch 3, **dadurch gekennzeichnet, dass** zumindest ein Vorhang (V) im Umlenkbereich (19) von der Behälterseitenwand (9, 10) beabstandet ist.

6. Schwerkraft-Abscheider nach Anspruch 3, **dadurch gekennzeichnet, dass** zumindest ein Vorhang (V) direkt an eine Behälterseitenwand (9, 10) angeschlossen ist.

7. Schwerkraft-Abscheider nach Anspruch 3, **dadurch gekennzeichnet, dass** der Vorhang (V) an einer oberhalb eines Freispiegels (13) im Behälter (1) installierten Abhängung (27) verankert ist.

8. Schwerkraft-Abscheider nach Anspruch 1, **dadurch gekennzeichnet, dass** der Vorhang (V) ein Wellen- oder Zick-Zack-Profil (28, 28') und/oder einzelne, schräg gestellte, annähernd parallele Platten (23) aufweist.

9. Schwerkraft-Abscheider nach wenigstens einem der vorhergehenden Ansprüche, **dadurch gekennzeichnet, dass** das Bauwerk (6) ein Schacht oder Topf ist und sich, vorzugsweise, bis zum Bodenbereich im Behälter (1) erstreckt.

10. Schwerkraft-Abscheider nach Anspruch 1, **dadurch gekennzeichnet, dass** Zu- und Auslauf (4, 5) entweder an einer Behälterseitenwand (9, 10) benachbart oder an sich gegenüberliegenden Behälterseitenwänden (9, 10) angeordnet und über Verrohrungen (17, 18) mit dem Bauwerk (6) verbunden sind.

11. Schwerkraft-Abscheider nach wenigstens einem der vorhergehenden Ansprüche, **dadurch gekennzeichnet, dass** der Behälter (1) einen einzigen Dom (2), vorzugsweise oberhalb des Bauwerks (6), aufweist.

12. Schwerkraft-Abscheider nach Anspruch 1, **dadurch gekennzeichnet, dass** im Bauwerk (6) in einem durch die Trennwand (20) separierten Volumenbereich der Mündung (8) ein auftriebsabhängig selbsttätiger Verschluss (50) vorgesehen ist, vorzugsweise ein Schwimmer (43) zum Blockieren der Mündung (8).

13. Schwerkraft-Abscheider nach Anspruch 12, **dadurch gekennzeichnet, dass** im Bauwerk (6) wenigstens eine oben liegende Öffnung (44) zum Volumenbereich der Mündung (8) vorgesehen ist.

14. Schwerkraft-Abscheider nach wenigstens einem der vorhergehenden Ansprüche, **dadurch gekennzeichnet, dass** das Bauwerk (6) einstückig und mit Ausmessungen ausgebildet ist, die kleiner sind als der Durchgang im Dom (2).
